## Europäisches Patentamt

## European Patent Office

## Office européen des brevets

(19)

(11) Veröffentlichungsnummer: **0 357 601 B1**

(12) **EUROPÄISCHE PATENTSCHRIFT**

(45) Veröffentlichungstag der Patentschrift: **06.02.91**

(51) Int. Cl.⁵: **B 65 G 23/44**

(21) Anmeldenummer: **87907504.2**

(22) Anmeldetag: **21.11.87**

(86) Internationale Anmeldenummer:
**PCT/DE87/00541**

(87) Internationale Veröffentlichungsnummer:
**WO 88/07489 06.10.88 Gazette 88/22**

(54) **FÖRDERER.**

(30) Priorität: **27.03.87 DE 3710044**

(43) Veröffentlichungstag der Anmeldung:
**14.03.90 Patentblatt 90/11**

(45) Bekanntmachung des Hinweises auf die
Patenterteilung:
**06.02.91 Patentblatt 91/06**

(84) Benannte Vertragsstaaten:
**AT CH DE FR GB IT LI**

(56) Entgegenhaltungen:
**GB-A- 693 366**
**US-A-2 612 988**
**US-A-3 007 344**
**US-A-3 946 861**

**IBM Technical Disclosure Bulletin, Band 16, Nr. 1, Juni 1973, (US) R. Sozio: "Tractor Chain Tensioner", siehe Seite 309**

(73) Patentinhaber: **ROBERT BOSCH GMBH**
**Postfach 10 60 50**
**D-7000 Stuttgart 10 (DE)**

(72) Erfinder: **LANGENBACHER, Markus**
**G.-F.-Händel Str. 12**
**D-7014 Kornwestheim (DE)**
Erfinder: **MAIER, Gernot**
**Im Geiger 81**
**D-7000 Stuttgart 50 (DE)**

Courier Press, Leamington Spa, England.

## Beschreibung

### Stand der Technik

Bei einem bekannten Förderer der gattungsmäßigen Art (US-A 2 612 988) ist die Entblockiertaste in einer seitlichen Ausnehmung des Gehäuses verschiebbar gelagert und muß zum Ausrücken der Sperrvorrichtung nach außen angehoben werden. Zu diesem Zweck ist ein zweiarmiger Hebel vorgesehen, der mit einem aus dem Gehäuse herausragenden Abschnitt der Entblokkiertaste über einen Bolzen gelenkig verbunden ist und sich mit einem Hebelarm am Gehäuse außen abstützt. Zum Festhalten des Spannelementes in einer Rückzugsposition wird eine zusätzlicher Sperrstift oder dergleichen vorgeschlagen.

### Vorteile der Erfindung

Die erfindungsgemäße Anordnung mit den kennzeichnenden Merkmalen des Hauptanspruchs hat demgegenüber den Vorteil, daß zusätzliche Bauelemente zum Verschieben der Entblockiertaste aus der Sperrstellung in eine Lösestellung nicht erforderlich sind, wodurch auch der Zusammenbau der Sperrvorrichtung erleichtert wird.

Durch die in den Unteransprüchen aufgeführten Merkmale sind vorteilhafte Weiterbildungen der Anordnung nach dem Hauptanspruch möglich.

Eine einfache, ebenfalls ohne zusätzliche Bau- und Bedienungselemente auskommende Ausführung ergibt sich durch die Merkmale des Anspruchs 3.

Die Erfindung ist anhand eines in der Zeichnung dargestellten Ausführungsbeispiels in der nachfolgenden Beschreibung näher erläutert. Es zeigen:

Fig. 1 eine schematisierte Seitenansicht eines Förderers mit endloser Förderkette,

Fig. 2 einen Schnitt einer Spanneinrichtung im Förderer gemäß Linie II-II in Fig. 1,

Fig. 3 einen Schnitt der Spanneinrichtung gemäß Linie III-III in Fig. 1.

### Beschreibung des Ausführungsbeispiels

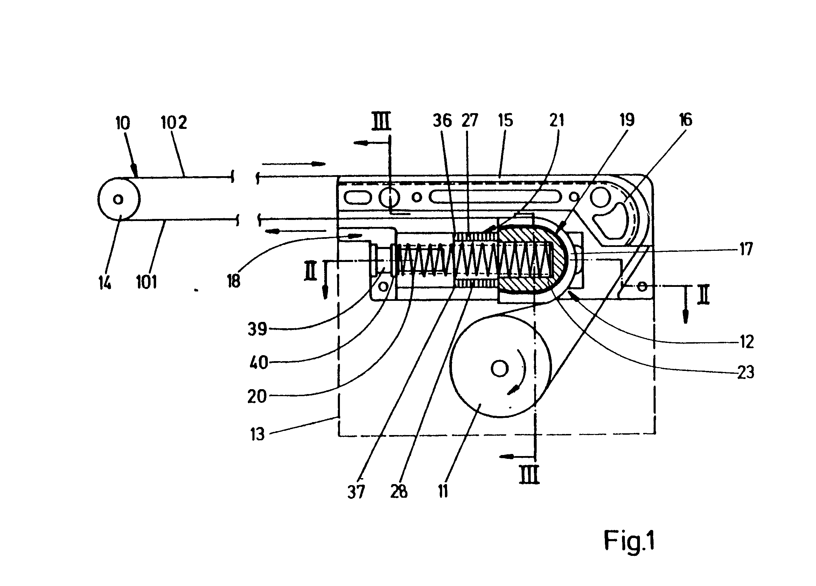

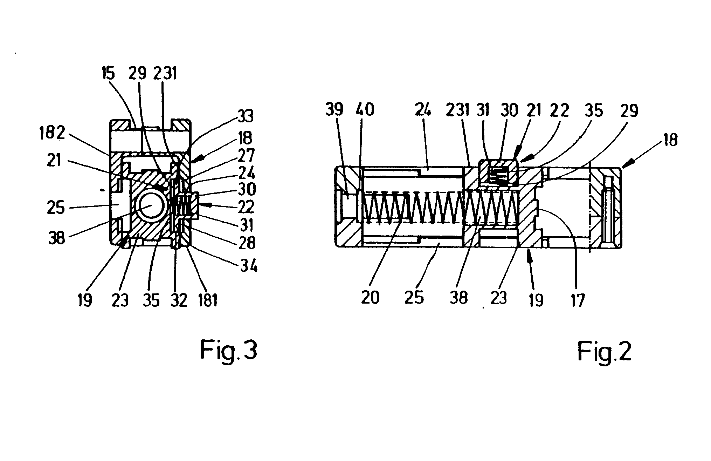

Der in Fig. 1 schematisch dargestellte Kettenförderer weist eine endlose Förderkette 10 auf, die von einem aus einer elektromotorisch angetriebenen Zahnwalze oder einem Zahnrad bestehenden Antrieb 11 im Normalbetrieb des Förderers in Pfeilrichtung umlaufend angetrieben wird. Der Antrieb 11 ist zusammen mit einer Spanneinrichtung 12 für die Förderkette 10 in einer Antriebsstation 13 zusammengefaßt. Von der Antriebsstation 13 verläuft ein unterer Abschnitt 101 (Rückführtrum) der Förderkette 10 zu einer Umlenkwalze 14 und von dort ein oberer, der Förderung dienender Abschnitt 102 (Zugtrum) der Förderkette 10 wieder zurück zur Antriebsstation 13. In der Antriebsstation 13 ist der obere Kettenabschnitt 102 in einer Laufschiene 15 geführt und über einen Umlenkteil 16 zum Antrieb 11 geführt, Die Spanneinrichtung 12 ist im unteren Abschnitt 101 der Förderkette 10, also zwischen dem Antrieb 11 und der Umlenkwalze 14 angeordnet, wobei die Förderkette 10 über eine Führung 17 der Spanneinrichtung 12 läuft. Die Spanneinrichtung 12 mit Führung 17 greift derart an der Förderkette 10 an, daß einerseits der Umschlingungswinkel der Förderkette an der Förderketten-Führung 17 wenig kleiner als 180° und der Umschlingungswinkel der Förderkette 10 an der Zahnwalze oder dem Zahnrad des Antriebs 11 größer als 180° ist. Die Spanneinrichtung 12 ist mit der Laufschiene 15 und dem Umlenkteil 16 zu einer konstruktiven Baueinheit zusammengefaßt, die im allgemeinen als Kettenspanner bezeichnet wird. Wie aus Fig. 1 und 3 ersichtlich, ist dabei die Laufschiene 15 und der Umlenkteil 16 auf der Oberseite eines Profilgehäuses 18 einstückig mit diesem angeordnet, während die Spanneinrichtung 12 im Innern des Profilgehäuses 18 angeordnet ist.

Die Spanneinrichtung 12 weist im einzelnen ein verschiebliches Spannelement 19 auf, das auf seiner Stirnseite die Förderketten-Führung 17 trägt, eine Spannfeder 20, die das Spannelement 19 in Richtung zur Förderketten-Führung 17 hin beaufschlagt, und eine einseitig nach Art einer Ratschkupplung wirkende Sperrvorrichtung 21 auf, die eine gegen die Wirkrichtung der Spannfeder 20 gerichtete Verschiebebewegung des Spannelements 19 blockiert. Mittels einer Entblockier- oder Freigabetaste 22 (Fig. 2 und 3) kann die wirkung der Sperrvorrichtung 21 manuell aufgehoben werden. Wie insbesondere aus Fig. 2 und 3 ersichtlich, ist das Spannelement 19 als Schlitten 23 ausgebildet, der in Längsführungen 24, 25, die in den beiden Seitenschenkeln 181, 182 des Profilgehäuses 18 angeordnet sind, längsverschieblich gehalten ist. Ober- und unterhalb der Längsführung 24 ist eine Zahnreihe 27, 28 angeordnet. Jede Zahnreihe 27, 28 ersteckt sich über den gesamten Verschiebeweg des Schlittens 23. Wie nicht im einzelnen zu sehen ist, weist jeder Zahn der Zahnreihen 27, 28 nach Art eines Sägezahns eine zur Verschieberichtung des Schlittens 23 quer gerichtete und eine in Spannrichtung des Schlittens 23, also in Richtung zu der Förderketten-Führung 17 hin, unter einem spitzen Winkel zur Verschieberichtung des Schlittens 23 verlaufende Zahnflanke auf.

Der Schlitten 23 besitzt auf seiner den Zahnreihen 27, 28 und der Längsführung 24 zugekehrten Seitenfläche 231 eine Ausnehmung 29. Die Freigabetaste 22 hat ein T-Profil mit einem durch die Längsführung 24 hindurchragenden Mittelteil 30, das mit einer Sackbohrung 31 versehen ist, und mit einem flachen Quersteg 32. Beidseitig des Mittelteils 30 trägt der Quersteg 32 auf den den Zahnreihen 27, 28 zugekehrten Flächen Sperrnasen 33 und 34. In der Sackbohrung 31 liegt eine schraubenförmige Andruckfeder 35 ein, die sich einerseits am Grunde der Sackbohrung 31 und andererseits am Schlitten 23 abstützt und dadurch die Sperrnasen 33, 34 in die Zahnreihen 27, 28 hineindrückt. Die Zahnreihen 27, 28 und die Freigabetaste 22 mit Sperrnasen 33, 34 und Andruckfeder 35 bilden vorstehend genannte Sperrvorrichtung 21 mit Entblockiertaste. Am Ende jeder Zahnreihe 27, 28 ist eine Verriegelungsnut 36 bzw. 37 vorgesehen. Wie nicht weiter zu sehen ist, hat die Verriegelungsnut 36 bzw. 37 zwei parallele, sich quer zur Verschieberichtung des Schlittens 23 erstreckende Nutflanken. Rasten die Sperrnasen 33, 34 in die zugeordneten Verriegelungsnuten 36, 37 ein, so kann diese Verriegelungsstellung des Schlittens 23 nur durch Betätigen der Freigabetaste 22 aufgehoben werden.

Der Schlitten 23 weist eine axiale Sackbohrung 38 auf, in welche die als Zylinderfeder ausgebildete Spannfeder 20 hineinragt und sich an dem Sackgrund abstützt. Das andere Federende der Spannfeder 20 umschließt einen mit der Sackbohrung fluchtenden Haltebolzen 39 und stützt sich auf einem am Haltebolzen 39 vorgesehenen Bund 40 ab. Der Haltebolzer 39 ist in der Rückseite des Profilgehäuses 18 gehalten. Unter der wirkung der Spannfeder 20 wird der Schlitten 23 in Spannrichtung der Förderkette 10 geschoben, wobei sich die Förderketten-Führung 17 gegen die Förderkette 10 angpreßt. Die sägezahnartige Zahnform der Zahnreihen 27, 28 läßt dabei bei in die Zahnreihen eingreifenden Sperrnasen 33, 34 ein Gleiten des Schlittens 23 in Spannrichtung zu, verhindert aber ein Zurückschieben des Schlittens 23, wenn auf die Förderketten-Führung 17 eine der Wirkrichtung der Spannfeder 20 entgegengerichtete Kraft ausgeübt wird. Damit ist der Reversierbetrieb des Förderers möglich, ohne daß die Wirkung der Spanneinrichtung 12 aufgehoben wird. Im Reversierbetrieb bewegen sich Rückführtrum 101 und Zugtrum 102 in die jeweils gegenüber den in Fig. 1 eingezeichneten Pfeilen entgegengesetzte Richtung.

Zur Demontage der Förderkette 10 kann die Spanneinrichtung 12 mittels der Freigabetaste 22 in einfacher Weise außer Betrieb genommen werden. Hierzu ist die Freigabetaste 22 einzudrükken, wodurch die Sperrnasen 33, 34 aus den Zähnen der Zahnreihen 27, 28 ausgehoben werden und damit die Wirkung der Sperrvorrichtung 21 aufgehoben ist. Der Schlitten 23 kann bei eingedrückter Freigabetaste 22 unter Zusammendrücken der Spannfeder 20 bis in seine Verriegelungsstellung am Ende der Zahnreihen 27, 28 zurückgeschoben werden. Wird in dieser Verriegelungsstellung die Freigabetaste 22 wieder freigegeben, so rasten die beiden Sperrnasen 33, 34 in die am Ende der Zahnreihen 27, 28 angeordneten Verriegelungsnuten 36, 37 ein. Die Spanneinrichtung 12 ist in ihrer wirkungslosen Stellung zuverlässig verriegelt. Die Förderkette 10 kann nunmehr gewechselt oder es können sonstige Arbeiten an ihr verrichtet werden. Zum Inbetriebnehmen des Förderers ist die Freigabetaste 22 wieder zu drükken, wodurch die Sperrnasen 33, 34 aus den Verriegelungsnuten 36, 37 ausgehoben werden und der Schlitten 23 sich unter der Wirkung der Spannfeder 20 soweit verschiebt, bis die Förderkette 10 wieder ihre Betriebsspannung erreicht hat.

Die Erfindung ist nicht auf den beschriebenen Kettenförderer beschränkt. Die erfindungsge-mäße Spanneinrichtung kann in gleicher weise bei Förderern mit endlosen flexiblen Förderbändern oder mit Rundschnur eingesetzt werden. Anstelle der einfachen Umlenkwalze 14 wird häufig eine Umlenkstation vorgesehen, die identisch der Antriebsstation 13 ausgebildet ist, mit dem einzigen Unterschied, daß der Antriebsmotor für das Kettenrad des Antriebs 11 entfällt.

## Patentansprüche

1. Förderer mit einem endlosen, flexiblen Förderglied (10), wie Förderband oder -kette, Rundschnur oder dergleichen, mit einer das Förderglied (10) antreibenden Antriebseinheit (13), einer Umlenkeinheit (14) zum Rückführen des Förderglieds (10) und mit mindestens einer Spanneinrichtung (12) für das Förderglied, die ein an dem Förderglied (10) anliegendes, als Schlitten (23) ausgebildetes und zwischen Seitenwänden (181, 182) eines Gehäuses (18) verschiebbar gelagertes Spannelement (19), eine am Spannelement (19) mit zum Förderglied (10) hin gerichteter Federkraft angreifende Spannfeder (20) und eine einseitig wirkende Sperrvorrichtung (21) aufweist, die mit einer gegenüber der Verschieberichtung des Schlittens (23) unverrückbar am Gehäuse (18) gehaltenen ersten Gruppe von Sperrzähnen (27, 28) und einer mit dem Schlitten (23) gekoppelt verschiebbaren zweiten Gruppe von Sperrzähnen (33, 34) versehen ist, wobei die Sperrzähne (27, 28, 33, 34) mit je einer zur Verschieberichtung des Schlitten (23) quer gerichteten und einer in Spannrichtung des Schlittens (23) unter einem spitzen Winkel zur Verschieberichtung des Schlittens (23) verlaufenden Zahnflanke versehen sind und eine gegen die Wirkrichtung der Spannfeder (20) gerichtete Verschiebebewegung des Spannelementes (19) blockieren, und ferner mit einer manuell zu betätigenden Entblockiertaste (22) zum Aufheben der Sperrwirkung, welche die eine Gruppe von Sperrzähnen (33, 34) trägt und quer zur Verschieberichtung des Schlittens (23) gegen Federdruck verlagerbar ist, dadurch gekennzeichnet, daß die Entblockiertaste (22) im Schlitten (23) quer zu dessen Verschieherichtung gegen die Kraft einer sich am Schlitten (23) abstützenden Andruckfeder (35) verschiebbar gelagert ist und durch eine Längsführung (24) in einer Seitenwand (181) des Gehäuses (18) nach außen hindurchragt, neben deren Längsrändern innen je eine gehäusefeste Sperrzahnreihe (27, 28) angeordnet ist, und daß der Schlitten (23) auf seiner den gehäusefesten Sperrzahnreihen (27, 28) zugekehrten Seitenwand (231) mit einer Ausnehmung (29) zur Aufnahme eines über beide Sperrzahnreihen (27, 28) greifenden Querstegs (32) der Entblockiertaste (22) versehen ist, der mindestens eine in die eine Sperrzahnreihe (27) eingreifende Sperrnase (33) und mindestens eine in die andere Sperrzahnreihe (28) eingreifende Sperrnase (34) aufweist.

2. Förderer nach Anspruch 1, dadurch gekennzeichnet, daß der Mittelteil der Entblockiertaste (22) eine Sackbohrung (31) zur Führungsaufnahme der Andruckfeder (35) aufweist.

3. Förderer nach Anspruch 1 oder 2, dadurch gekennzeichnet, daß an dem von dem Förderglied (10) abgekehrten hinteren Ende der Zahnreihe (27, 28) eine Verriegelungsnut (36, 37) für die Sperrnase (33, 34) vorgesehen ist, die derart ausgebildet ist, daß die Sperrnase (33, 34) nur durch Betätigen der Entblockiertaste (22) aushebbar ist.

4. Förderer nach einem der Ansprüche 1 bis 3, dadurch gekennzeichnet, daß das Spannelement (19) derart im Förderweg des Fördergliedes (10) angeordnet ist, daß sein Umschlingungswinkel durch das Förderglied (10) wenig kleiner als 180° ist, und daß das Spannelement (19) mit einem weiteren Umlenkelement (16) zu einer Baueinheit vereinigt ist.

5. Förderer nach Anspruch 4, dadurch gekennzeichnet, daß die Antriebseinheit (11) zwischen dem weiteren Umlenkelement (16) und der Spanneinrichtung (11) angeordnet ist, vorzugsweise derart, daß der Umschlingungswinkel der Antriebseinheit (11) durch das Förderglied (10) größer als 180° ist.

6. Förderer nach einem der Ansprüche 1 bis 5, dadurch gekennzeichnet, daß das Spannelement (19) an seinem am Förderglied (10) anliegenden Ende eine Führung (17) für das Förderglied (10) trägt.

7. Förderer nach einem der Ansprüche 1 bis 6, dadurch gekennzeichnet, daß die Spanneinrichtung (12) im Rückführabschnitt (101) des Fördergliedes (10) zwischen Antriebseinheit (11) und Umlenkeinheit (14) angeordnet ist.

**Revendications**

1. Convoyeur avec un organe de transport (10) sans fin, flexible, tel qu'une bande ou une chaîne transporteuse, une gaine circulaire ou un moyen analogue, avec une unité d'entraînement (11) entraînant l'organe de transport (10), avec une unité de renvoi (14) pour retourner l'organe de transport (10) et avec au moins un dispositif tendeur (12) pour l'organe de transport, qui présente un élément tendeur (19) appuyant sur l'organe de transport (10), réalisé sous forme de coulisseau (23), et monté déplaçable entre deux parois latérales (181, 182) d'un carter (18), un ressort de tension (20) agissant sur l'élément tendeur (19) à l'aide d'une force élastique dirigée vers l'organe de transport (10), et un dispositif tendeur (21) agissant sur un côté, dispositif qui est pourvu d'un premier groupe de dents de blocage (27, 28) maintenu immobile sur le carter (18), vis-à-vis du sens de déplacement du coulisseau (23), et avec un deuxième groupe de dents de blocage (33, 34) mobiles et accouplées au coulisseau (23), les dents de blocage (27, 28, 33, 34) étant chacune pourvue d'un flanc orienté transversalement par rapport au sens de déplacement du coulisseau (23) et d'un flanc faisant un angle aigu par rapport au sens de déplacement du coulisseau, et qui bloquent tout déplacement de l'élément tendeur (19) orienté à l'opposé du sens d'action du ressort de tension (19), et comportant en outre une touche de déblocage (22) à actionner manuellement, pour supprimer l'effet de blocage, qui porte un des groupes (33, 34) de dents de blocage et qui est déplaçable transversalement par rapport à la direction de déplacement du coulisseau (23), contre la pression d'un ressort, caractérisé en ce que la touche de déblocage (22) est montée déplaçable dans le coulisseau (23), transversalement par rapport à sa direction de déplacement, contre la force d'un ressort de pression (35) s'appuyant sur le coulisseau (23), et qu'elle dépasse à l'extérieur sur une paroi latérale (181) du carter (18), en passant par un guidage longitudinal (24), une rangée de dents de blocage (27, 28) fixes par rapport au carter étant disposée intérieurement à côté de ses bords longitudinaux, et que le coulisseau (23) est pourvu sur sa paroi latérale (231) tournée vers la rangée de dents (27, 28) fixée sur le carter d'un évidement (29) pour recevoir une nervure transversale (32) de la touche de déblocage (22), qui vient en prise sur les deux rangées de dents de blocage (27, 28) et qui présente au moins un ergot de blocage (33) venant en prise dans l'une des rangées de dents de blocage (27) et au moins un ergot de blocage (34) venant en prise dans l'autre rangée de dents de blocage (28).

2. Convoyeur selon la revendication 1, caractérisé en ce que la partie centrale de la touche de déblocage (22) présente un trou borgne (31) pour recevoir le guidage du ressort de pression (35).

3. Convoyeur selon la revendication 1 ou 2, caractérisé en ce que, sur l'extrémité arrière de la rangée de dents (27, 28) qui est éloignée de l'organe de transport (10), il est prévu une gorge de verrouillage (36, 37) pour l'ergot de blocage (33, 34), qui est réalisée de façon que l'ergot de blocage (33, 34) ne puisse être soulevé que par actionnement de la touche de déblocage (22).

4. Convoyeur selon l'une des revendications 1 à 3, caractérisé en ce que l'élément tendeur (19) est disposé dans la course de transport de l'organe de transport (10) de telle façon que son angle d'enroulement par l'organe de transport (10) est un peu inférieur à 180°, et que l'élément tendeur (19) est réuni en une unité de construction à l'aide d'un élément de renvoi (16) supplémentaire.

5. Convoyeur selon la revendication 4, caractérisé en ce que l'unité d'entraînement (11) est disposée entre l'élément de renvoi supplémentaire (16) et le dispositif tendeur (11), de préférence de telle façon que l'angle d'enroulement de l'unité d'entraînement (11) par l'organe de transport (10) est supérieur à 180°C.

6. Convoyeur selon l'une des revendications 1 à 5, caractérisé en ce que l'élément tendeur (19) porte à son extrémité appuyant sur l'organe de transport (10) un guidage (17) pour l'organe de transport (10).

7. Convoyeur selon l'une des revendications 1 à 6, caractérisé en ce que le dispositif tendeur (12) est disposé dans la section de retour (101) de l'organe de transport (10), entre l'unité d'entraînement (11) et l'unité de renvoi (14).

## Claims

1. Conveyor with an endless, flexible conveying member (10), such as a conveyor belt or chain, round cord or the like, with a drive unit (13) driving the conveying member (10), a deflection unit (14) for returning the conveying member (10), and with at least one tensioning device (12) for the conveying member, which device has a tensioning element (19) in the form of a slide (23) resting against the conveying member (10) and displaceably mounted between side walls (181, 182) of a housing (18), a tension spring (20) acting on the tensioning element (19) with spring force directed towards the conveying member (10), and a locking device (21) which acts at one side and is provided with a first group of locking teeth (27, 28) held on the housing (18) immovably in the opposite direction to the displacement direction of the slide (23), and a displaceable second group of locking teeth (33, 34) coupled to the slide (23), while the locking teeth (27, 28, 33, 34) are each provided with a tooth flank running at right angles to the displacement direction of the slide (23) and one running in the tensioning direction of the slide (23) at an acute angle to the displacement direction of the slide (23), and block a displacement movement of the tensioning element (19) against the working direction of the tension spring (20), and also with a manually operated deblocking button (22) for releasing the locking action, which bears one group of locking teeth (33, 34) and is movable against spring pressure at right angles to the displacement direction of the slide (23), characterized in that the deblocking button (22) is mounted so that it is displaceable in the slide (23) at right angles to its displacement direction against the force of a compression spring (35) resting against the slide (23) and projects out through a longitudinal guide (24) in a side wall (181) of the housing (18), beside each of the longitudinal edges of which on the inside a row of locking teeth (27, 28) fixed to the housing is disposed, and in that on its side wall (231) facing the rows of teeth fixed to the housing the slide (23) is provided with a recess (29) to accommodate a transverse web (32) of the deblocking button (22) gripping over both rows of locking teeth (27, 28), which web has at least one locking catch (33) engaging in one row of locking teeth (27) and at least one locking catch (34) engaging in the other row of locking teeth (28).

2. Conveyor according to Claim 1, characterized in that the central part of the deblocking button (22) has a blind hole (31) for guiding and accommodating the compression spring (35).

3. Conveyor according to Claim 1 or 2, characterized in that a locking groove (36, 37) for the locking catch (33, 34) is provided at the rear end of the row of teeth (27, 28) facing away from the conveying member (10), said groove being designed in such a way that the locking catch (33, 34) can be released only by operating the deblocking button (22).

4. Conveyor according to one of Claims 1 to 3, characterized in that the tensioning element (19) is disposed in the conveying path of the conveying member (10) in such a way that its arc of contact by the conveying member (10) is slightly less than 180°, and in that the tensioning element (19) is combined with a further deflection element (16) to form a structural unit.

5. Conveyor according to Claim 4, characterized in that the drive unit (11) is disposed between the further deflection element (16) and the tensioning device (11), preferably in such a way that the arc of contact of the drive unit (11) by the conveying member (10) is greater than 180°.

6. Conveyor according to one of Claims 1 to 5, characterized in that the tensioning element (19) bears a guide (17) for the conveying member (10) at its end resting against the conveying member (10).

7. Conveyor according to one of Claims 1 to 6, characterized in that the tensioning device (12) is disposed in the return section (101) of the conveying member (10) between drive unit (11) and deflection unit (14).

Fig.1

Fig.2

Fig.3